# DEMANDE DE BREVET EUROPEEN

(11) **EP 1 331 766 A1**
(43) Date de publication de la demande: **30.07.2003**
(21) Numéro de dépôt: 01403312.0
(22) Date de dépôt: 20.12.2001
(51) Int. Cl.: H04L 12/56, H04L 12/46, H04L 12/26

(54) **Telekommunikationssystem mit einer Architektur von virtuellem Dienst-Netzwerk**

(71) Demandeur: ALCATEL, 75008 Paris (FR)
(72) Inventeur: De Neve, Hans Maria Paul, 2300 Turnhout (BE); Goderis, Danny José, 1731 Relegem (BE)
(74) Mandataire: Narmon, Gisèle

(57) **Abstract**

A telecommunication system to interconnect end-users and comprising one or more interconnected Virtual Service Networks (VSN) each associated to a data transport network. Each Virtual Service Network provides Quality-of-Service (QoS) guarantee for aggregated dataflows and comprises a Virtual Service Network Controller (VSNC) to control the resources of the Virtual Service Network and to perform a per-user admission control on each dataflow wanting to be transferred through said associated data transport network. Furthermore, each Virtual Service Network has a reachability agreement providing Quality-of-Service guarantees between end-users of the telecommunication system. This reachability agreement comprises the location of a point of attachment (TAP) of the VSNs and corresponding to a peering point (PP) of the data transport network through which data is exchanged between virtual service networks, an agreement to exchange routing information between virtual service networks, and the location of at least one virtual service network controller (VSNC) for each VSN, this virtual service network controller being adapted to exchange resource-signaling messages between the VSNs and to perform end-to-end admission control for the end-users dataflows.

## Description

### Field of the invention

This invention relates to a telecommunications system employing a virtual service network architecture for providing real-time multimedia and other end-user services requiring Quality-of-Service (QoS). Such services are typically provided over packetised networks based on Internet protocol (IP) quality of service across multiple network provider domains.

### Background of the invention

One of the main problems facing the provisioning of inter-domain IP QoS for next generation networks is that these services require strict guarantees for delay, jitter, packet loss and available resources along the entire data path. Various solutions have been proposed. These include Integrated Services IP QoS technology (IntServ) [RFC 1633: R. Braden, D. Clark and S. Shenker, "Integrated Services in the Internet Architecture: an Overview", June 1994; All the RFCs (Requests For Comments) mentioned herein, are standards from the Internet Engineering Task Force (IETF) standardization body, of which more detail may be found at the Internet site http://www.ietf.org/], Differentiated Services IP QoS technology (DiffServ) [RFC 2475: S. Blake, D. Black, M. Carlson, E. Davies, Z. Wang and W. Weiss, "An Architecture for Differentiated Services", December 1998.] and the combination IntServ over DiffServ [RFC 2998: Y. Bernet, P. Ford, R. Yavatkar, F. Baker, L. Zhang, M. Speer, R. Braden, B. Davie, J. Wroclawski, E. Felstaine. "A Framework for Integrated Services Operation over DiffServ Networks", November 2000.] IP QoS technology. IntServ is based on the reservation of resources by Resource Reservation Protocol (RSVP) - signaling along the data path in each hop and per multimedia application. This solution is not scalable for core routers, as a result of which this technology does not get deployed.

DiffServ provides edge-to-edge guarantees (i.e. per DiffServ Code Point) in a single domain for an aggregate of packet streams. It does not provide a solution in a multiple domain application, and it is also not clear how it can be used for providing Internet protocol quality of service to individual multimedia services. The IntServ over DiffServ approach consists basically in multiplexing IntServ (micro) flows into DiffServ (pre-configured, single domain) edge-to-edge pipes. The concept can not be extended as such to inter-domain applications (the Internet, say). This would require either end-to-end pipes between all "Service Access Points" across the world or demultiplexing the IntServ flows at the (gigabit) Border Routers. In both cases, scalability problems hamper the solution.

### Summary of the invention

The invention proposes a solution that is applicable at a single domain and multiple domain level and is scalable to operate globally. The idea is to create a system analogous to Virtual Private Networks (VPN) [RFC 2547: E. Rosen, Y. Rekhter "BGP/MPLS VPNs", March 1999], which transport public services, like voice and video, and requires strict quality of service guarantees. Such a system is called a Virtual Service Network or VSN. The owner of the VSN leases transport capacity from a Network Provider (NP) and uses these resources himself to offer public services to end-users. Basically, a VSN is a VPN with QoS guarantees between the end-point of the VPNs and a per-end-user flow admission control.

A VSN has typical local coverage, e.g. a single network transport domain or single autonomous system. Therefore QoS for aggregate packet streams or traffic envelopes (e.g. a "pipe") within a VSN can be obtained based on DiffServ technology. However DiffServ is not sufficient for providing QoS to single applications or flows within the traffic envelope of the VSN. Therefore each VSN is controlled by an admission control server, called a VSN Controller (VSNC), which controls the VSN resources and performs per-flow admission control for every flow that wants to transit the VSN.

As VSNs have only local coverage, they need to peer with other VSNs to have worldwide reach for the public end-user services. Such a peering or reachability agreement between end-users basically contains three types of information:
First: The location of the point of attachment of the VSNs, called Transit Access Point (TAP) or correspondingly the physical Peering Point (PP). This is the point through which packets are exchanged between VSNs;
Second: The agreement to exchange routing information between the VSNs. Each VSN has his own routes, i.e. end-user reachability based on IP addresses. Peering VSNs are exchanging this information such that larger geographical coverage is obtained; and
Third: The location of the VSN Controllers such that resource-signaling messages can be exchanged between the VSNs, enabling end-to-end admission control for the user-flows.

The broad operation is as follows:

End-to-end flows transiting a number of VSNs need to be admitted by all corresponding VSN Controllers. The per-flow resource request can be communicated to the VSN controller of the first VSN in a number of ways. If the first VSN has enough resources to accommodate this flow, the first VSN controller will then forward the per-flow resource request to the VSN controller of the next VSN via a dedicated resource-signaling protocol. In this way the per-flow resource requests passes through a sequence of VSN controllers mapping to the sequence of VSNs that the packets of the flow will transit and each VSN controller checks whether there are enough resources in his VSN. In this way end-to-end QoS for end-user applications can thus be obtained in a scalable fashion. The VSN Controller can be implemented in a centralized (e.g. one VSNC per VSN) or a distributed way (e.g. a VSNC per Service Access Point of the VSN). The VSNC-to-VSNC resource signaling protocol can be out-of-band (for example for centralized VSNCs) or distributed (for example for distributed VSNCs); or a combination of both (in-band for certain parts of the network and out-of-band for other parts of the network).

Accordingly, a first embodiment of the present invention is a method to provide a telecommunication system including a Virtual Service Network for allocating data network resources to user dataflows in a data transport network, the virtual service network controlling said user dataflows through said data transport network in accordance with agreed Quality-of-Service guarantees.

This method is characterized in that said virtual service network further establishes user admission criteria for controlling the admission of dataflows in said data network.

This method may be implemented as a virtual layer between the physical transport layer and the end user dataflows.

According to a further embodiment, the invention provides a method to provide a telecommunication system with a plurality of interconnected Virtual Service Networks, each virtual service network being associated to a data transport network and controlling user dataflows through its associated data transport network in accordance with agreed Quality-of-Service (QoS) guarantees.

This method is characterized in that each of said virtual service networks further establishes user admission criteria for controlling the admission of dataflows in its associated data transport network, in order to achieve said agreed Quality-of-Service guarantees, and in that each of said virtual service networks establishes a reachability agreement between end-users, said reachability agreement providing Quality-of-Service guarantees through said telecommunication system.

Another embodiment of the invention provides a telecommunication system including a data transport network and a virtual service network for providing user dataflows with a predetermined Quality-of-Service guarantee across the data transport network.

According to the invention, this telecommunication system is characterized in that the virtual service network includes a virtual service network controller (VSNC) adapted to control the resources of said virtual service network and to perform a per-user admission control on each user dataflow wanting to be transferred through said data transport network.

A further embodiment of the present invention provides a telecommunication system adapted to interconnect end-users and comprising a plurality of interconnected virtual service networks each associated to a data transport network.

Also according to the invention, this telecommunication system is characterized in that each of said virtual service networks is adapted to provide Quality-of-Service guarantee for aggregated dataflows, in that each of said virtual service networks comprises a virtual service network controller (VSNC) adapted to control the resources of said virtual service network and to perform a per-user admission control on each dataflow wanting to be transferred through said associated data transport network, and in that each of said virtual service networks has a reachability agreement providing Quality-of-Service guarantees between end-users of said telecommunication system.

More particularly, said reachability agreement preferably comprises:
- the location of a point of attachment (TAP) of the virtual service networks, said point of attachment corresponding to a peering point (PP) of the data transport network and through which data is exchanged between virtual service networks,
- an agreement to exchange routing information between virtual service networks, and
- the location of at least one virtual service network controller (VSNC) for each virtual service network, said virtual service network controller being adapted to exchange resource-signaling messages between the virtual service networks and to perform end-to-end admission control for the end-users dataflows.

A still further embodiment of the present invention is a method of providing Quality-of-Service guaranteed communication in a telecommunication system having two or more peered virtual service networks.

This method is characterized in that it includes steps of:
- providing user Quality-of-Service guarantees within each network;
- providing network service level guarantees between the virtual service networks;
- storing system topology and/or resource and/or availability information within each virtual service network;
- relaying to the peered virtual service networks a service request received from a sending host by a home network of the sending host and addressed to a destination host not connected to the home network;
- determining in the peered virtual service networks if they are connected to the destination host; and
- in the peered virtual service network to which the destination host is connected, sending an acknowledgment message to establish a connection having a required Quality-of-Service.

In another embodiment there is provided a method of configuring an inter-domain virtual service network between two or more peering intra-domain virtual service networks.

This method is characterized by the steps of:
- establishing domain service level specifications (VSN SLA) across each domain;
- establishing inter-domain service level specifications between pairs of peering intra-domain virtual service networks;
- controlling resource availability within each domain to conform to the domain service level specification under the control of a corresponding network management system; and
- controlling resource availability between the domains of peering virtual service networks to conform to the inter-domain service level specifications.

In a further embodiment of the invention there is provided a virtual router for use in a transmission network and which includes storage means storing information on reachability service level agreements, said information identifying which subscribers can be reached by a particular service provider by means of:
- physical peering points between virtual service networks,
- virtual service network identification tag to configure network elements, and
- the IP address of the virtual service network controller of the virtual service network.

According to a yet further embodiment there is provided method of setting up dataflow between a service provider and an user in a telecommunication system including a plurality of peered virtual service networks.

This method is characterized in that:
- the user sends a request to the application control server (MMCS) for a requested service,
- a unique IP address is allocated by the service provider to the user within the virtual service network environment,
- the user and service provider negotiate the Quality-of-Service (QoS) requested via the application control server,
- the application control server initiates call resource signaling through intermediate virtual service network controllers to destination application control server, and
- each virtual service network controller checks resources and relays the request to a next hop virtual service network controller.

### Brief description of the drawings

**Figure 1** shows a high-level view of the existing QoS problem;
**Figure 2** shows a schematic diagram illustrating the roles and agreements involved in the virtual service network architecture;
**Figure 3** shows a single domain Virtual Service Network architecture diagram;
**Figure 4** shows the logical interconnection or peering of single domain Virtual Service Networks; A physical implementation is illustrated in figure 6
**Figure 5** shows the VSN reference architecture and the VSN Controller; Realizing this architecture requires three basic new ideas of this invention; illustrated in the following figure
**Figure 6** illustrates the stitching of SLSs between peering VSNs;
**Figure 7** illustrates selective route installation in the virtual routers of a VSN across network boundaries, based on contractual information; and
**Figure 8** illustrates the route information alignment between the of VSNC (in the control plane) and the Virtual Routers (in the data plane);

### Detailed description of the embodiments

### Problem statement

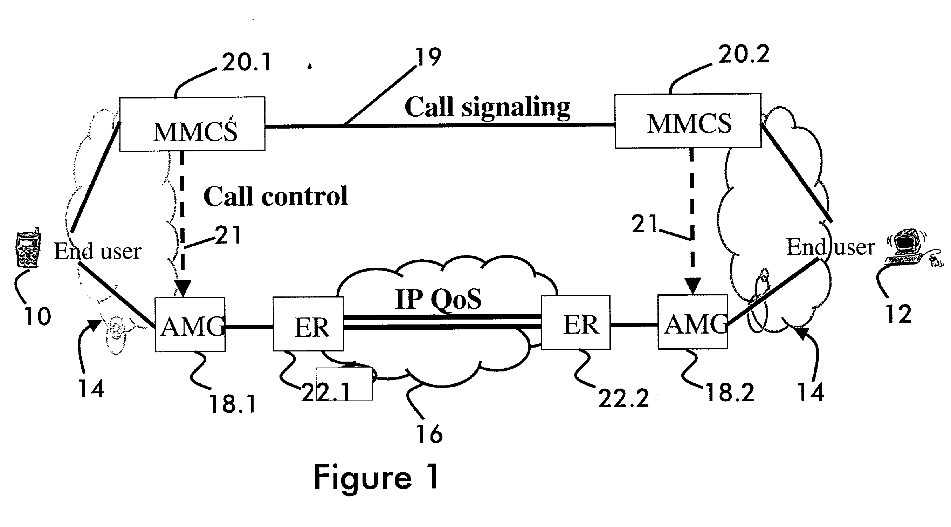

Figure 1 shows a high level view on the problem to solve, i.e. providing end-to-end QoS between the end users 10 and 12. The end-user may also be a physical device like e.g. a video-on-demand server. The end-to-end path is composed of an access part 14 and a core part 16. Access Media Gateways (AMGs) 18.1 and 18.2 are placed at the edge of the network. The AMG is a generic term for any aggregator of end-user traffic at the network edge, e.g. a Broadband Access Server (Asymmetric Digital Subscriber Line access), a GGSN (Universal Mobile Telecommunications System access), a gateway, etc. The end-user may activate its service, like voice or video, in several ways. Figure 1 shows service activation by means of an application signaling protocol (like Session Initiation Protocol or H.323), where the user sends signaling information to the application control entity of the service provider, called an MMCS (multimedia call server) 20.1 and 20.2 like e.g. a gatekeeper or a SIP proxy interconnected via call signaling 19. Other means for activating the service are possible as well, such as accessing the portal site of the service provider. In any case, the application control entity, e.g. the MMCS, decides on user access to services and therefore the MMCS 20.1 and 20.2 also controls the AMG, as is shown at 21. The latter device takes care of per flow traffic conditioning and generates statistics that may be used for accounting and billing purposes. The MMCS processes the user service requests and controls the access to the network by configuring the AMG to allow certain flows to pass.

Providing QoS in the access network 14, i.e. from end-user to AMG, is solved for most of the access technologies today, like e.g. ATM (Asynchronous Transfer Mode), xDSL access or wireless UMTS (Universal Mobile Telecommunications System) access. Therefore providing end-to-end QoS to end-user applications amounts to providing QoS between any two access concentrators, i.e. AMGs, which might be inter-connected by the Internet (IP) or any large set of transport networks, e.g., via edge routers (ER) 22.1 and 22.2.

### Terminology concerning involved roles and agreements

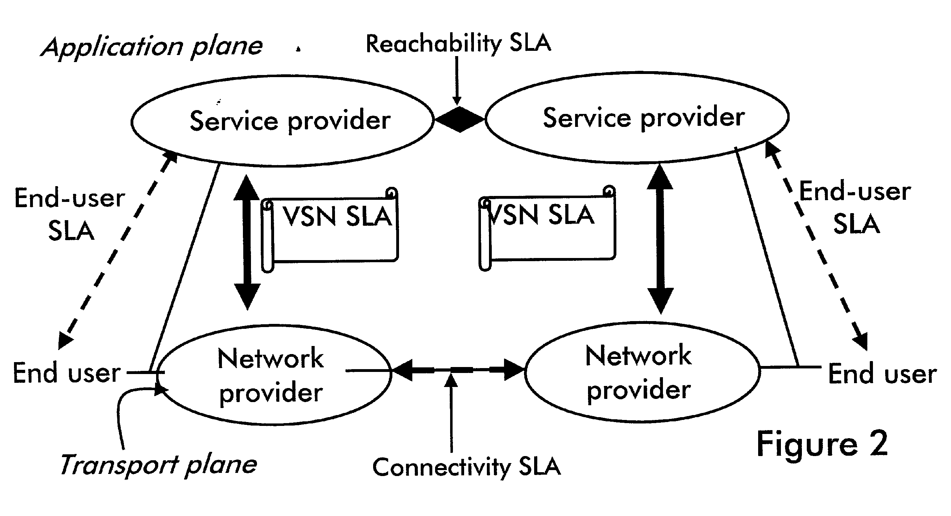

Figure 2 shows, at a conceptual level, the different roles and agreements involved in the offering of end-user services. The basic idea is to create Virtual Private Networks (VPNs), which transport public services, like voice and video, and require strict quality of service (QoS) guarantees. Such a VPN is called a Virtual Service Network (VSN). The owner of the VSN, called the Service Provider (SP), leases capacity from the owner of transport infrastructure, called a Network Provider (NP). The leased capacity is described through a contractual agreement between SP and NP, called a VSN service level agreement (VSN SLA). The Service Provider uses these (leased) resources to offer public services to end-users. Although Figure 2 shows a 1-to-1 relationship between Network Provider and Service Provider, in reality an any-to-any relationship is possible. A network provider may offer leased transport capacity to any number of Service Providers. A service provider may have VSN SLAs with more than one Network Provider in order to obtain larger coverage of its user base. In case multiple network providers are involved for connecting remote end-users, then they should have connectivity agreements for exchanging "packets" as these exist today in the Internet (nothing new). If multiple service providers are needed for connecting remote end-users, then these service providers should have reachability agreements, such as those which for example voice operators of different countries have today.

### Single Domain Virtual Service Networks

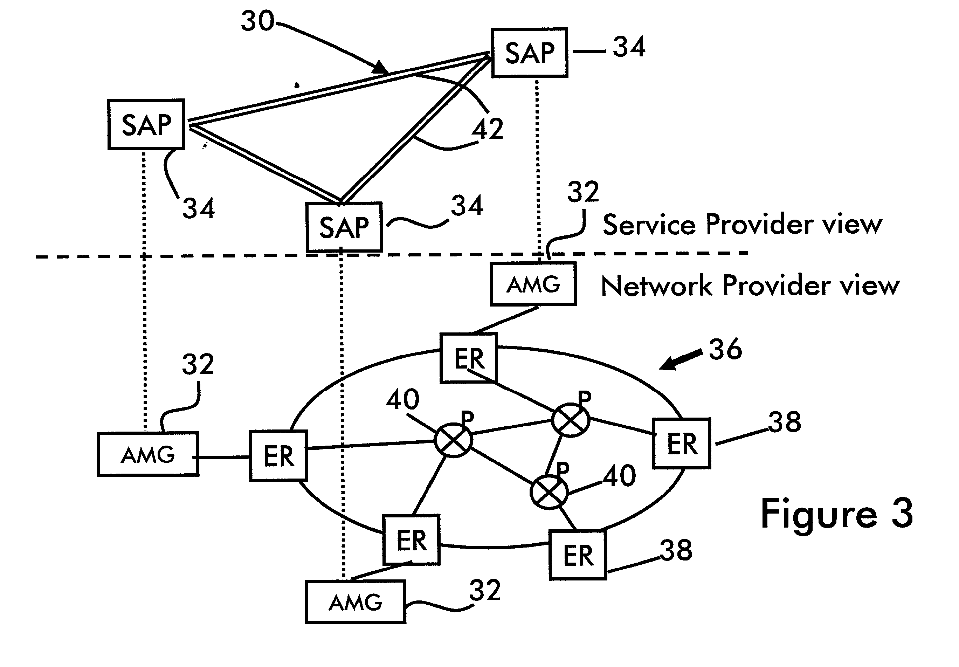

Figure 3 shows a virtual service network (VSN) 30 covering a single transport domain. The VSN is a virtual overlay network between Access Media Gateways (AMG) 32 corresponding to a Service Access Points (SAP) 34 in VSN. It is owned by a service provider, who uses the VSN as infrastructure for the offering of end user services. The VSN offers the service to all end-users concentrated at one of the AMGs. The VSN SLA describes basically the VSN topology (number of SAPs, connectivity between the SAPs, e.g. full mesh-connectivity) and QoS characteristics between each set of reachable SAPs (throughput, maximum delay, etc).

The lower tier of Figure 3 shows the transport network 36, including Edge Routers 38 via which the Access Media Gateways (AMG) are connected to networks and Core Routers 40 that interconnect the Edge Routers. Within Edge Routers (ER) 38 and Core Routers (P) 40, the quality of service is offered using DiffServ technology incorporating DiffServ Code Points (DSCP).

The top tier of Figure 3 includes the virtual service network, interconnecting the Access Media Gateways 32 or SAPs 34 with QoS pipes. DiffServ offers well-defined QoS guarantees for packet aggregates, such as maximum delay or packet loss, between each pair of AMGs, thus yielding QoS-pipes 42 between AMGs 32. In DiffServ terminology, these QoS pipes 42 correspond to Service Level Specifications (SLSs).

The QoS pipes 42 do not necessarily form a full mesh between all AMGs 32. This implies that communication between two AMGs attached to the same virtual service network might transit more than one QoS pipe (not shown in the Figure). Therefore, and to obtain QoS guarantees between each pair of SAPs, it is important that packets from a VSN are routed along the QoS pipes (SLSs) of their VSN. This requires that the routing decisions and forwarding of packets in Edge Routers and Core Routers need to be taken in the context of each VSN separately. This ensures that packets belonging to a particular VSN are routed along the QoS pipes that have been configured for that VSN, allowing e.g. that packets of different VSNs or "best-effort" [BE] packets may follow a different route. This implies that Edge Routers and Core Routers maintain a Virtual Routing context for each VSN and routing decisions are taken within this Virtual Routing context. If Edge Routers are interconnected by Core Routers that do not support the Virtual Routing context, the routing decision in those Core Routers need to be bypassed by tunneling the packets between the Edge Routers (using for example Multi Protocol Label Switching - MPLS). In this way, the AMGs are interconnected by an IP VPN with QoS pipes between the VPN end-points. There are a number of techniques to realize an IP VPN. A technique like the known BGP/MPLS (Virtual Routers) [see e.g. RFC 2547] would be ideal for the present case but other VPN techniques would apply as well. Route and IP reachability exchange within a VSN is similar to that in VPNs. Access Media Gateways communicate their subnet address to the Edge Router via a routing protocol (e.g. Open Shortest Path First or BGP [Boarder Gateway Protocol] ) or via static configuration of the carrier. The VPN routing protocols will then make sure that these addresses are communicated to the remote Edge Routers and attached AMGs belonging to the same VSN.

### Peering of Virtual Service Networks

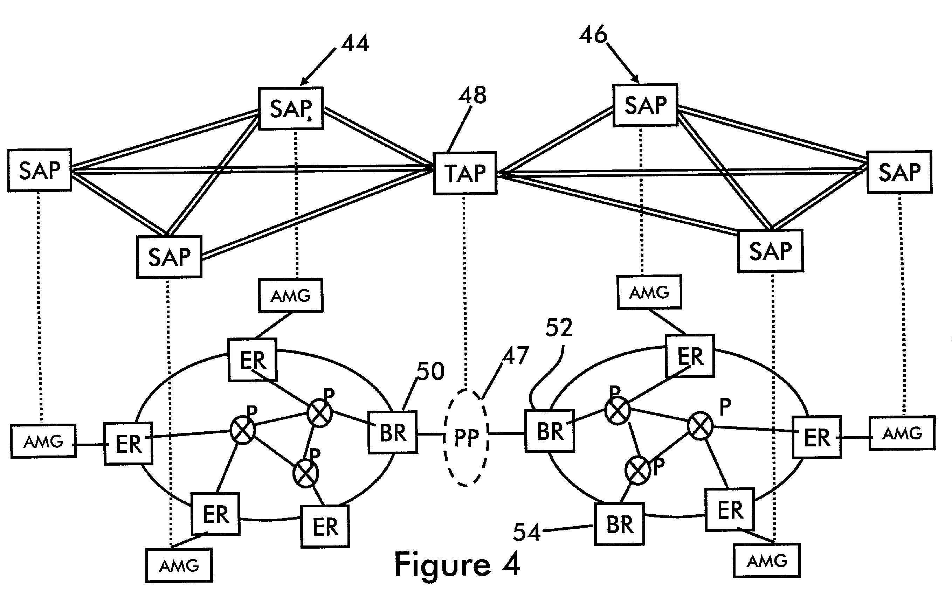

Figure 4 shows the peering or interconnection of two Virtual Service Networks 44 and 46. This allows for a larger geographical coverage and related user base for the offered (end-user) service. The goal is to obtain worldwide coverage, requiring any-to-any QoS connectivity amongst AMGs. This is obtained by interconnection of VSNs. Indeed, a single VSN has only local coverage. Although an IP VPN (and the corresponding VSN) may extend inter-domain including multiple transport domains (this is not shown in the Figures), an IP VPN can never interconnect all user aggregation points (AMGs). This would roughly require AMG-to-AMG pipes across the world, which yields an unscalable VPN. Therefore the peering of VSNs as shown in Figure 4 is an important embodiment of the solution.

Service Providers, owning a VSN, will set up peering agreements with other Service Providers. End-to-end flows connecting remote end-users likely travel along a concatenation of VSNs. In order to ensure that the chain of service level specifications (SLSs or QoS pipes) is not broken, the VSNs need to peer at a well-defined point, called a peering point (PP) 47 corresponding to a Transit Access Point (TAP) 48. The location of this peering point is part of the reachability agreement between the service providers. The physical location of the PP within the transport network infrastructure may be at the Border Routers (BR) 50 and 52 or at the link between Border Routers of neighboring transport domains.

Coverage of all users connected to either one of the VSNs, at either side of the PP 47, is ensured by a set of (bi-directional) SLSs or QoS pipes between the AMGs and the peering point. In the top tier of Figure 4 this is illustrated by the interconnections between any of the SAPs and the TAP. These local SLSs, which belong to one VSN only, are similar to SLSs between AMGs and are implemented in the same way. From a local point of view, i.e. from the viewpoint of one VSN only, the TAP (or PP) has exactly the same role as a SAP (or AMG). It is important to note that the SLSs are strictly local, i.e. there is no direct SLS interconnection between SAPs of different VSNs in the upper tier of Figure 4. Such direct links would correspond with inter-domain SLSs and would represent an inter-domain IP VPN instead of two interconnected single domain VSNs (or VPNs).

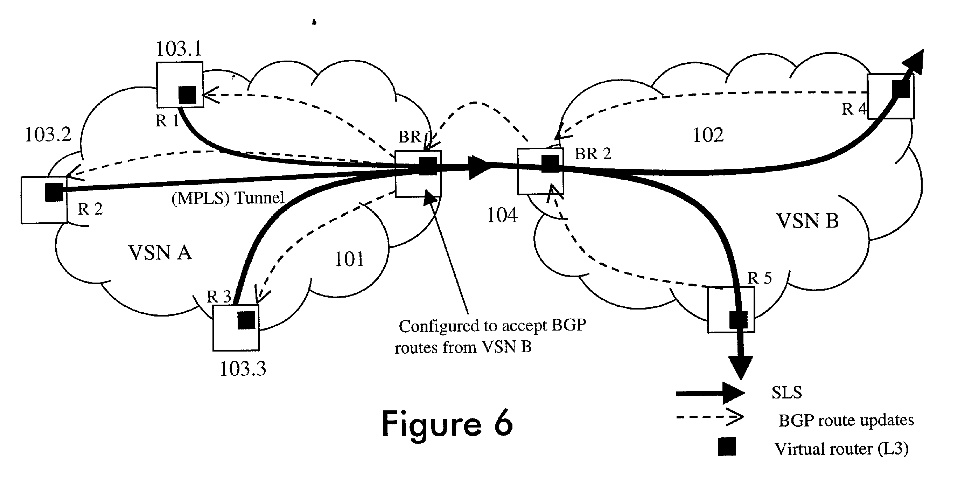

The confluence of VSNs at a peering point yields reachability amongst users at either side of the TAP. Before IP packets may flow across the PP 47, it is required that the VSNs exchange routing information. The virtual routing context of a VSN (present in all edge routers and the border router) knows reachability (routing) information about all of its own AMGs (analogously as in Figure 3). In case a VSN peers with another VSN (Figure 4), the VSN virtual routing context must also know the AMGs reachable in the peering VSNs and the AMGs that can be reached via this peering VSN. More generally, a VSN virtual routing context must know about all reachable AMGs in (directly) peering VSNs but also about AMGs in remote VSNs that can be reached via the peering VSN having its own peering points. This implies that if a VSN peers, it becomes part of a global inter-VSN network exactly like a stand-alone network becomes part of the Internet when it peers with a network which is already part of the Internet. This can be achieved by configuring the VPN routing protocols such that routing information from one VPN (VSN) is announced to another VPN. This is an important element of this embodiment and will be explained further in more details with reference to the Figure 6.

### Description of broad operation - reference architecture

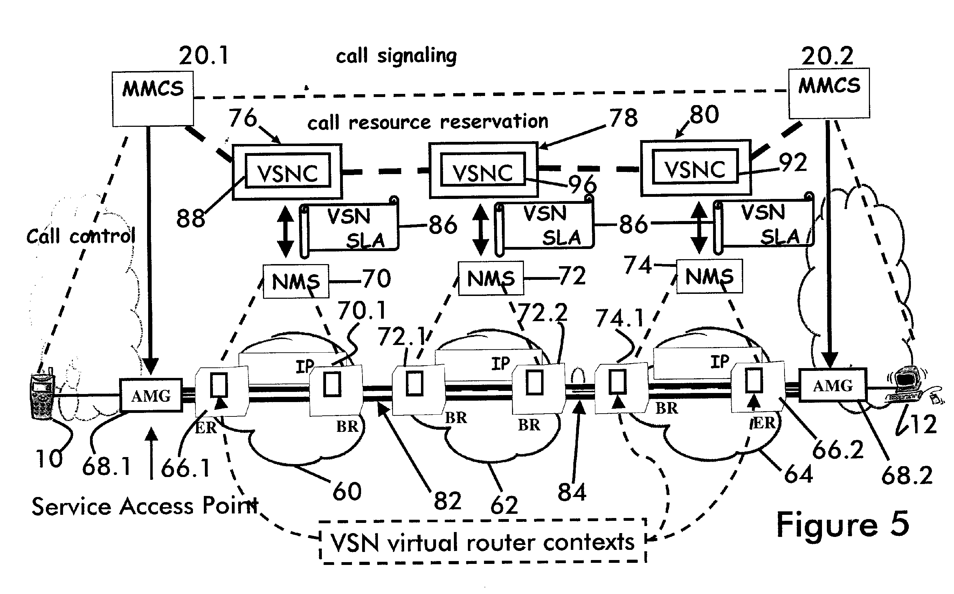

The broad operation of the present invention applied to an inter-network environment will now be described with reference to Figure 5 which shows Virtual Service Network reference architecture, i.e. the proposed solution for the QoS problem described in Figure 1 above.

The lower tier of Figure 5 shows three transport domains 60, 62 and 64. The left and the right domains are connected to access networks; i.e. their edge routers (ER) 66.1 and 66.2 are directly linked with end-user aggregator AMGs 68.1 and 68.2. For simplicity only one AMG (and ER) is shown, but clearly multiple AMGs are connected to edge routers of the left and right transport domains 60 and 64. The middle domain 62 is shown as a transit domain, although also this domain could be connected to (non-shown) access networks. Each of these transport domains is controlled by an (ordinary) Network Management System (NMS) 70, 72 and 74. The NMS configures the (edge, core, and border) DiffServ routers 66.1, 70.1, 72.1, 72.2, 74.1 and 66.2. of the relevant domain by any means (e.g. Command Line Interface commands, Simple Network Management Protocol or Common Open Policy Server protocol). The edge and border routers of the domains are able to support several routing contexts, like for example the BGP/MPLS Virtual Routers [RFC 2547].

The middle tier of Figure 5 shows the presence of three Virtual Service Networks 76, 78 and 80, as explained above. The first (second, etc) VSN owner leases capacity from the first (second, etc) network provider, which yields SLSs (or QoS pipes) between its AMGs and between any AMG 68.1 and 68.2 and the Peering Points 82 and 84. Any VSN SLA 86 between Service Provider and Network Provider also implies the presence of dedicated VSN virtual routing contexts in the edge and border routers ER and BR (lower tier in Figure 5). The Figure shows that the second (middle) VSN 78 has an SLS (or QoS pipe) between the two Peering Points. A first peering point 82 is located between the first 60 and the second 62 domains, whilst a second peering point 84 is located between the second 62 and the third 64 domains. As explained above, there could also be AMGs attached to this domain and there might even be more connected transport domains, each with dedicated Peering Points. The presence of the Peering Points 82 and 84 is a consequence of the reachability agreements between VSN1-VSN2 and VSN2-VSN3 respectively. If no such mutual reachability agreement exists between two VSN owners, then there is no TAP corresponding to the peering point between the corresponding VSNs.

The configuring of the VSN (or VPN) within the transport network is done by the NMS 70, 72 and 74 of the network provider. The control of the VSN itself, i.e. the control of the leased resources amongst AMGs and between AMGs and peering point, is done by VSN Controllers (VSNC) 88, 90 and 92. The VSNC is owned by the owner of the VSN itself (the Service Provider) and it is a new functional element, dedicated to the VSN QoS solution. The VSNC may be part of an existing device such as a MultiMedia Call Server MMCS, or it may be a stand-alone device. The VSN Controller may be implemented in a centralized or a distributed fashion. In the former case one has e.g. one VSN Controller per VSN (shown in figure 5). In the latter case one has multiple VSN Controllers for a single VSN, e.g. a VSN Controller at each Service Access Point (SAP) /Transit Access Point (TAP) of the VSN. This is an implementation choice, of which both options are included within this invention. The functionality of the VSNC is to be explained further on in more detail.

The NMS, owned by the network provider, and the VSNC, owned by the service provider, share the same (contractual) information contained in the VSN SLA as has been referred to with reference to Figures 3 and 4. This information (SLSs or QoS pipes, topology, capacity, etc) is relatively static (typically days or months) compared to the relatively dynamic time scales of, e.g., call set-up and tear down of voice and video (typically minutes or hours). The NMS configures the transport network with this static information, a difficult task, but performed on a static basis. The VSNC installs this information in a VSNC database and will use this information for processing service (or call) requests making use of the (leased) VSN resources. In case of a, e.g. single, centralized VSNC one (logical) database installs all relevant VSN SLA information containing, e.g., the full mesh of SLSs (QoS pipes) - and their capacity - between all Service Access Points. In case of a distributed VSNC, one-VSNC-per-SAP implementation, the VSN SLA information is also distributed. For example the VSNC at the ingress SAP only "sees" the SLSs (or QoS pipes) starting at this SAP, i.e. this VSNC sees a "star of SLSs in stead of a full-mesh of SLSs.

At this stage the NMS configures the network and the VSNC installs the virtual network information in the VSNC database. However, before services or calls can use the VSN resources, the routing information of the VSN must also be shared between transport and network provider equipment in the manner described below.

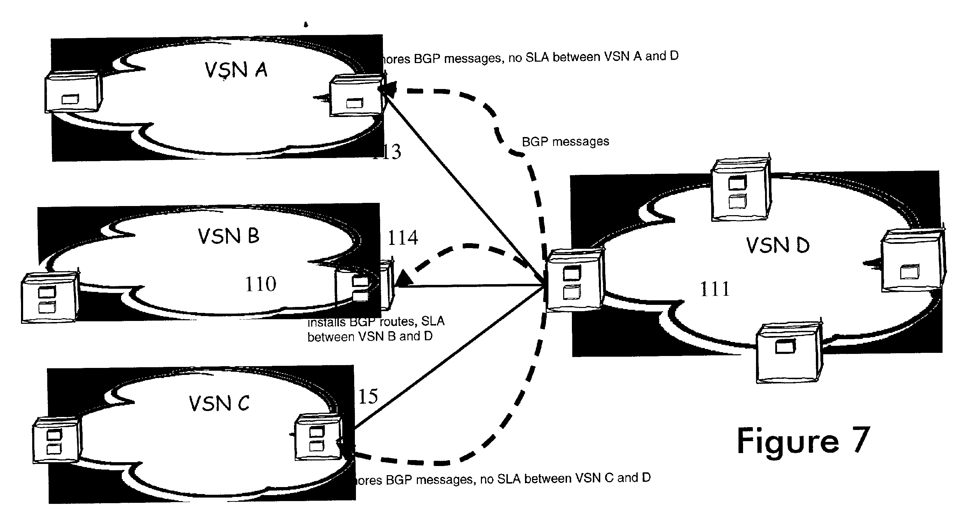

The lower tier of Figure 5 also shows the presence of VSN virtual routing contexts (VR) in each edge and border router, as was explained in Figure 3. The VSN VRs in the routers guarantee that packets (carrying a service served by the VSN) are routed along the SLSs or QoS pipes of that VSN, i.e., the routing decision of the packets is done within the VR context of the VSN. The same mechanism is used to guarantee the routing of packets between transport domains or border routers. The exchange of information between VRs of peering VSNs ensures that packets will travel along the SLS of one VSN towards the peering point and from the peering point onwards, the SLSs of the next VSN takes it over. It is important to note that if VSNs do not have a reachability agreement, then their VRs will not exchange routing information (across inter-domain links). A possible implementation of this mechanism is explained in Figures 6 and 7.

The routing information of a dedicated VSN, present in all of the VR contexts in edge and border routers carrying SLSs of the VSN, must be known by the VSN Controller VSNC. Indeed, the VSN controller must know about the sequence of SLSs (eventually both in its own VSN and in peering VSNs) that the packets will follow. Therefore the VSNC needs to be aware of the routing decisions that have been taken in the virtual routing context of the VSN. In fact, the basic routing requirements for the VSNC are twofold.

First the VSNC must be able to find the appropriate next VSNC, responsible for the resource admission control in the next VSN, if the destination can not be reached by it's own VSN. This may e.g. be fulfilled if the VSN Controller maintains a routing table, mapping each destination subnet mask to a "next hop" VSN controller if the destination is not in the same VSN.

The second basic VSNC routing requirement is that the VSNC must be able to identify the ingress and egress points for the dataflow path as it traverses the Virtual Network The realization of this requirement depends on the VSNC implementation and the nature of the resource signaling mechanism. There are two extreme cases. The first case is a centralized VSNC implementation combined with out of band resource signaling, i.e. the resource signaling messages are not traveling along the routers on the data path. The VSNC, which is not on the data path must nevertheless know about the information in the virtual routing tables of the VSN. This can, e.g., be realized by setting up a routing protocol session between one or more Edge Routers and the VSN controller. In this way, the VSN controller learns about the routes, which are advertised within the VSN context, and makes up its own routing table

The second case is a distributed VSNC implementation ("living in the border router") combined with in-band signaling.

The exchange of routing information - within virtual routing contexts -amongst VSNs is transferable across the domains. Taking for instance a case of three VSNs: VSN1, VSN2 and VSN3. If VSN1 and VSN2 have a reachability agreement and, as a consequence, exchange routing information, and if the same holds for VSN2 and VSN3, then automatically VSN1 knows about the routing information of VSN3. This is guaranteed by the operation of the routing protocols, as BGP (Boarder Gateway Protocol), themselves. The exchange of routing information is also relatively static (typically hours or days) compared with the more dynamic time scales of e.g. call set-up of voice and video.

At this stage the routing information is exchanged amongst VR contexts of peering VSNs (and beyond) and this information is made available to the VSN Controllers. Now the VSNs are configured to accept user requests for QoS sensitive services (like voice, video, etc).

Figure 5 shows at the left- and right-hand access networks which concentrate users. The AMGs are access concentrators and are directly connected to an Edge router of an IP transport domain (analogously as in Figure 1).

Now an end-user 10 requests for, negotiates and eventually activates an end-user service by sending a request from its terminal to the application control server of the Service Provider SP via the MMCS 20.1. This can, e.g., be done by a call signaling protocol such as a Session Initiation Protocol [SIP] or H.323. Another possibility is that the user selects the service (by "clicking") on the portal website of the SP. During the call-signaling phase, the Service Provider SP may allocate to the user, i.e. the caller 10, a dedicated IP address for the duration of the service (or call). The address of the user's terminal may also be obtained at time of terminal configuration (e.g. UMTS) or at time of dial-in Internet Access (e.g. broadband ATM). This address may or may not be an IP public address. In summary, the VSN solution is independent of the addressing issue, which might be private, public, IPv6, etc. The only requirement is that, within a VSN routing context, the user's IP address should be unique. Also during this initial call signaling phase, the caller 10 will retrieve the IP address of the called party 12 via a DNS like mechanism, based on the called party identifier. In summary, the call signaling protocol handles also mobility and roaming aspects as well as user authentication and authorization. All this is independent of the QoS problem as described by Figure 1.

The user and service provider (SP) must also agree (during call set-up) on the QoS requirements of the service, such as required throughput, delay or packet-loss. This information can be exchanged in numerous ways between the user and SP. The QoS request could be "piggybacked" onto the call signaling protocol, e.g. SIP-SDP (Session Description Protocol). For voice, for example, the QoS requirements can be deduced from the codec type. Another possibility is that the client selects the service (by "clicking") on the portal website of the SP and implicitly determines the QoS requirements. Yet another possibility is that the user signals in-band its QoS requests to the AMG (by e.g. RSVP), which in turn pushes the information to the MMCS or responsible application server.

At this stage, all users (participating in the service), their physical location and the IP source and destination addresses, are identified. Also the service QoS requirements are requested from the application control server (the MMCS in Figure 5). Now, the call resources signaling phase can start (see Figure 5). The call resource-signaling phase is initiated by the MMCS 20.1 (serving the caller), travels along the chain of VSNCs towards the MMCS 20.2 (serving the called party). The signaling protocol, which is a dedicated protocol, can be in-band (the signaling is not traveling along the routers on the data-path) or out-of-band. It may also very well be a combination of both, e.g. some parts of the en-to-end path are controlled by a centralized (out-of-band) VSNC, while other parts may be controlled by distributed (in-band) VSNCs.

If a user (via the MMCS) requests resources from a VSN, the VSN Controller needs to process two things. First, the VSNC must check whether there are enough resources left in its own VSN to accommodate the flow. Second, the VSNC should eventually also forward the resource request to a peering VSN (VSNC) if the called party is not attached to its own VSN.

Based on the IP destination address of the called party, the VSN should determine on which sequence of SLSs or QoS pipes the flow will travel (in its own VSN). This implies that the VSN retrieves the ingress and egress SAP (or TAP). The ingress SAP can be retrieved based on the party that made the resource request: clients of a VSN should agree on a particular ingress SAP and should identify themselves when requesting resources from the VSN. In order to find the egress SAP (TAP), the VSN should find the next VSN and the peering point associated with that VSN. This is done based on a routing table that maps destination IP addresses to a next VSN. Based on the VSN service level agreements, the VSN is also aware of the total capacity of the QoS pipes and the QoS guarantees as regards delay, jitter and the like for traffic aggregates within these QoS pipes (VSN SLA information). When combined with the VSNs knowledge about all other ongoing calls in the QoS pipe, the VSN can perform resource admission control for the newly arriving call.

The per-call admission control within a VSN is thus performed by the VSN Controller (VSNC 176). The VSNC has a view of the (leased) resources and topology of the VSN 60 by means of the VSN SLA 86 and handles the per-call resource signaling and admission.

If admitted, the VSN controller forwards the call request to the next hop VSN controller that needs to follow the same procedure, namely, determination of the next hop VSN, entry and exit point within its own VSN and admission control on the path between entry and exit point. When the call request reaches the remote VSN 64 that serves the called party 12, the call request will be signaled back to the originating VSN 60 to perform the admission control on the backward path.

If all VSNCs along the signaling path admit the service, then the MMCS 20.1 will at the end acknowledge the call to the user and packets may start flowing.

### Implementation and operation of Border Routers

Figure 6 and 7 illustrate the implementation of the VSN virtual routing contexts and the exchange of routing information between VSNs. While one embodiment of the invention utilizes on BGP/MPLS [RFC 2547] implementation, but extends it to links between different transport domains or - analogously - alternative embodiments include iBGP connections (RFC 2547) or eBGP connections.

Service providers want to offer their customers connectivity to a large set of subscribers. A single VSN manages a single transport domain, and hence, it can reach only a limited amount of subscribers. Therefore, the service provider establishes reachability SLAs with other service providers. Such an SLA includes:
- Reachability information, i.e. which subscribers can be reached by a particular service provider;
- Physical peering point, i.e. where the two VSNs are physically connected together;
- The IP address of the VSNC of the service provider; and
- VSN identification tag, needed to configure the network elements.

### The concept of virtual routers

When two service providers have established such an SLA their VSNs should be connected. Routing information can then be exchanged in the form of BGP messages. It is important that routing information is only passed upstream along the SLSs of a particular VSN. This ensures that the multimedia packets will only be routed along paths with pre-provisioned SLSs with strict delay and bandwidth guarantees and routing information is not passed along routes where the sequence of SLSs would be broken. This implies that the routing decisions for multimedia packets in the context of a VSN are different from for example the routing decisions for best-effort Internet traffic. One way to achieve the selective distribution of routes and separate routing tables for best-effort data and multimedia traffic is to use VPN techniques and Virtual Routers. A technique like BGP/MPLS [RFC 2547] may be used but other VPN techniques would apply as well. Virtual routers can be configured such that they only install BGP routes from peering service providers with whom a reachability SLA has been established. Another advantage of virtual routers is that they enable the support of multiple service providers on a single transport network with each service provider having their own routing tables depending on the reachability SLAs they have.

Summarizing, by means of virtual routers a VSN can:
- Distribute routes upwards of SLS;
- Selectively peer with other VSNs, based on commercial reasons;
- Coexist in the same backbone with other VSNs and the possibly the best effort (BE) Internet; and
- Forward packets based on IP destination address only since peering VSNs form a transparent IP network.

Figure 6 shows how the SLSs of two peering VSNs 101 and 102 are concatenated and how the route information is propagated upstream the SLSs. The SLSs are enforced at the ingress point of the network. Hence, the SLSs of VSN 101 are enforced at respectively 103.1, 103.2 and 103.3. The two SLSs of VSN B are enforced at Border Router 2 (104).

The border routers support virtual routers, which are L3 IP routers. This way, the connectionless and aggregate nature of IP technology is preserved. Between two virtual routers, packets will be forwarded by means of a tunneling mechanism. This can be achieved with e.g. MPLS, ATM or IP tunnels. It should be clearly noted that no end-to-end (MPLS) tunnels are setup, only intra-domain tunnels.

The implementation of VSNs with BGP/MPLS VPNs will now be described.

VSNs can be based on BGP/MPLS Virtual Private Networks (VPN) [RFC 2547] because they support the concept of virtual routers and the concept of L3 border routers that are connected to each other by MPLS tunnels. Hence, VSNs are implemented as overlay networks. Each VSN has its own routing table depending on the reachability SLAs it has. The traffic of a VSN is identified by means of an MPLS label. When traffic is forwarded between two virtual routers there may be MPLS switches in between which are not VSN aware. In this case two MPLS labels should be used. The inner label is used to identify which virtual router has to be used in the border router and the outer label is used to route the packet between the two border routers.

Route distribution in VSNs can be done by means of BGP. A BGP speaker sends a messages to its peers to announce the routes. The BGP message that is exchanged contains, besides the IP addresses and path (attributes of "normal" BGP update messages), the following information (typical VPN/VSN attributes):
- VSN/VPN identifier, needed to support selective route distribution. A router only installs the announced BGP route if it is allowed by a peering SLA agreement between the VSN-owners of the VRs sending and receiving the BGP message; and
- MPLS label, needed to identify the originating VSN/VPN of the packets. Indeed, remind that edge/border routers may support multiple VPNs and VSNs. If a packet arrives at a border router, this router must have a means to identify which VPN/VSN should now carry the packet further and which virtual router context will route the packet further. This is the purpose of the MPLS label, which has only local meaning between e.g. two border routers. The transmitting border router will attach the MPLS label (a value which he got from the BGP message) to the IP packet, such that receiving border router knows which VPN will now carry and forward the packet further downstream.

Figure 7 explains how the routes are distributed and selectively installed in the virtual routers. Suppose that there is only a reachability agreement between VSN B, 110 and VSN D, 111. The border router, 112, of VSN D, 111, will broadcast the BGP route announcements to all its peer networks, e.g., via, border routers 113, 114, 115. This message contains the IP address, path, VSN id and MPLS label. The VSN id is used in the virtual routers 113, 114, 115 of VSN A, B and C to check if they should install this route (i.e. if they have a reachability SLA with VSN D). In the example shown in Figure 7 the virtual routers of VSN A and C ignore the BGP messages but VSN B, 110, installs the route and forwards the routes to its internal peers. This is analogous to using the BGP/MPLS VPN architecture from [RFC 2547bis], extended to eBGP connections, i.e. between border routers of two domains.

Considering packet flow between two border routers (i.e. virtual routers), when a packet arrives at the border router its MPLS label is used to identify the correct virtual router (i.e. it identifies the correct VSN). The MPLS label is then removed and normal IP forwarding is done in that virtual router. A new MPLS label is then attached to identify the next virtual router. This label value is known at the next virtual router due to the route distribution by BGP.

Each Virtual Service Network should have a Virtual Service Network Controller that performs the functionality described above (centralized or distributed, in-band or out-of-band implementation).

When the VSNC receives a reservation request it performs an admission control. Therefore, it has to identify the correct SLS (or QoS pipe) over which the packet flow will be transported. Then the reservation request must eventually be forwarded to the next VSNC.

The operation of the VSNC is summarized as follows:
- From the IP address of the previous VSNC (or caller) the physical peering point which the traffic will enter the network can be derived because this is specified in the reachability SLA between service providers (or user/service provider). Hence, the ingress point (SAP or TAP) is known its own VSN.
- The VSNC then has to use the destination IP address of the media flow (i.e. IP address of destination AMG) specified in the call request to look-up in its routing table whether the destination is in its own VSN or if not, which of the peering VSNs it needs to contact. This information is stored in the routing table of the VSNC and is aligned with the VSN virtual routing context in the edge/border router.
- If the address is local, the VSNC will obviously know about the egress SAP while if the address is not local, the VSNC will also know about the egress TAP because the table look-up yields the next hop VSN and the TAP is exactly the peering point with the next hop VSN.
- The correct SLS to perform call admission control for can now be identified because the ingress and egress SAP/TAP are known.

The table look-up in the VSNC also yields the address of the next VSNC because the relation next hop VSN and the IP address of the VSNC are known from the reachability agreements amongst peering service providers.
- The reservation request can now be forwarded to the next VSNC.

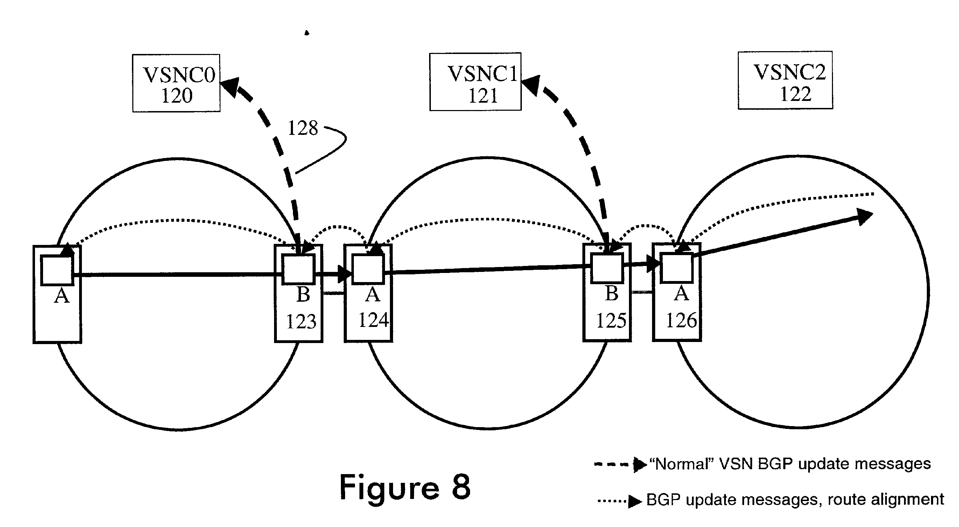

The implementation of the process is described with the aid of Figure 8.

In order to perform this routing function the VSNC has to determine what route the packets of the media flow (for which the reservation is being made) will follow. Hence, there is a need to install a routing table in the VSNC 120, 121, 122. This routing table must be synchronized with the routing tables of the (virtual) border routers 123, 124, 125. This can be achieved by making the VSNC a BGP speaker, or by configuring the VSNC as a "CE" (Customer Equipment) -device of the VPN. By creating a BGP connection 128 between the border router and the VSNC the routing information in the control plane (VSNC) is synchronized with the routing information in the transport plane (in the Virtual routers).

It will be understood that the invention disclosed and defined herein extends to all alternative combinations of two or more of the individual features mentioned or evident from the text or drawings. All of these different combinations constitute various alternative aspects of the invention.

The foregoing describes embodiments of the present invention and modifications, obvious to those skilled in the art can be made thereto, without departing from the scope of the present invention.

## Claims

1. A telecommunication system including a data transport network and a virtual service network (VSN) for providing user dataflows with a predetermined Quality-of-Service (QoS) guarantee across the data transport network, **characterized in that** the virtual service network includes a virtual service network controller (VSNC) adapted to control the resources of said virtual service network and to perform a per-user admission control on each user dataflow wanting to be transferred through said data transport network.

2. A telecommunication system according to claim 1, **characterized in that** said data transport network is a Virtual Private Network (VPN) adapted to provide to said virtual service network a guaranteed data transport capacity.

3. A telecommunication system according to claim 1, **characterized in that** that said virtual service network controller (VSNC) is adapted to manage (VSN SLA) the resources of said data transport network.

4. A telecommunication system according to claim 1, **characterized in that** that said user data in arranged in packets of data.

5. A telecommunication system adapted to interconnect end-users and comprising a plurality of interconnected virtual service networks (VSN) each associated to a data transport network,
**characterized in that** each of said virtual service networks (VSN) is adapted to provide Quality-of-Service (QoS) guarantee for aggregated dataflows,
**in that** each of said virtual service networks comprises a virtual service network controller (VSNC) adapted to control the resources of said virtual service network and to perform a per-user admission control on each dataflow wanting to be transferred through said associated data transport network, and
**in that** each of said virtual service networks has a reachability agreement providing Quality-of-Service guarantees between end-users of said telecommunication system.

6. A telecommunication system according to claim 5, **characterized in that** said reachability agreement comprises:
- the location of a point of attachment (TAP) of the virtual service networks, said point of attachment corresponding to a peering point (PP) of the data transport network and through which data is exchanged between virtual service networks,
- an agreement to exchange routing information between virtual service networks, and
- the location of at least one virtual service network controller (VSNC) for each virtual service network, said virtual service network controller being adapted to exchange resource-signaling messages between the virtual service networks and to perform end-to-end admission control for the end-users dataflows.

7. A telecommunication system according to claim 6, **characterized in that** said agreement to exchange routing information is based on Internet Protocol [IP] addressing.

8. A telecommunication system according to claim 5, **characterized in that** each virtual service network is owned by a service provider (SP) that leases transport capacity from a network provider (NP) owning a transport domain corresponding to said data transport network.

9. A telecommunication system according to claim 8, **characterized in that** said telecommunication system includes an inter-domain routing facility containing memory means adapted to store virtual routing tables identifying the service providers having peering agreements with one another, whereby, owing to said virtual routing tables, said end-users are interconnected via service level specifications (SLS) of the thus identified service providers.

10. A telecommunication system according to claim 9, **characterized in that** each service provider has an associated virtual service network controller (VSNC: 88, 92, 96) adapted to perform admission control on incoming dataflow requests from end-users on a per-flow basis, and to forward said dataflow request to the virtual service network controller of a predetermined other service provider having peering agreements with the first mentioned service provider.

11. A telecommunication system according to claim 10, **characterized in that** the virtual service network controllers (VSNC) of the service providers (SP) include bandwidth verification means adapted to verify the available bandwidth along the end-to-end chain of service level specifications (SLA) between the end-users.

12. A telecommunication system according to claim 9,
**characterized in that** the inter-domain routing facility includes an input border router (BR) and an output border router (BR),
**in that** the network is the Internet, and
**in that** the service provider (SP) is an Application Service Provider (ASP).

13. A telecommunication system according to claim 10, **characterized in that** public addresses are used for exchange between peering virtual service networks (VSNs) defining said service level specifications (SLSs) and for uniquely identifying end-users.

14. A telecommunication system according to the claims 12 and 13, **characterized in that** the same public address is installed in multiple virtual router functions for enabling the same user destination to be reached through different application service providers.

15. A virtual router for use in a transmission network as claimed in claim 14, **characterized in that** said virtual router includes storage means storing information on reachability service level agreements, said information identifying which subscribers can be reached by a particular service provider by means of:
- physical peering points between virtual service networks,
- virtual service network identification tag to configure network elements, and
- the IP address of the virtual service network controller of the virtual service network.

16. A method to provide a telecommunication system including a virtual service network (VSN) for allocating data network resources to user dataflows in a data transport network, the virtual service network controlling said user dataflows through said data transport network in accordance with agreed Quality-of-Service (QoS) guarantees, the method being **characterized in that** said virtual service network further establishes user admission criteria (VSN SLA) for controlling the admission of dataflows in said data network.

17. A method to provide a telecommunication system with a plurality of interconnected virtual service networks (VSN), each virtual service network being associated to a data transport network and controlling user dataflows through its associated data transport network in accordance with agreed Quality-of-Service (QoS) guarantees,
the method being **characterized in that** each of said virtual service networks further establishes user admission criteria (VSN SLA) for controlling the admission of dataflows in its associated data transport network, in order to achieve said agreed Quality-of-Service (QoS) guarantees,
and **in that** each of said virtual service networks establishes a reachability agreement between end-users, said reachability agreement providing Quality-of-Service guarantees through said telecommunication system.

18. A method according to claim 17, **characterized in that** said reachability agreement contains:
- the location of the point of attachment (TAP) of the virtual service networks, said point of attachment corresponding to a physical peering point (PP) of the data transport network,
- an agreement to exchange routing information between the virtual service networks, and
- the location of virtual service network Controllers (VSNC) for exchanging resource-signaling messages between the virtual service networks and for enabling end-to-end admission control for the user dataflows.

19. A method of providing Quality-of-Service (QoS) guarantees in a virtual service network (VSN) having virtual service network controller, **characterized in that** the method includes the steps of:
- storing network topology and/or resources information;
- storing user Quality-of-Service information;
- monitoring service requests from authorized users; and
- allocating resources according to the Quality-of-Service information.

20. A method of providing Quality-of-Service (QoS) guaranteed communication in a telecommunication system having two or more peered virtual service networks (VSNs), **characterized in that** the method includes:
- providing user Quality-of-Service guarantees within each network;
- providing network service level guarantees between the virtual service networks;
- storing system topology and/or resource and/or availability information within each virtual service network;
- relaying to the peered virtual service networks a service request received from a sending host by a home network of the sending host and addressed to a destination host not connected to the home network;
- determining in the peered virtual service networks if they are connected to the destination host; and
- in the peered virtual service network to which the destination host is connected, sending an acknowledgment message to establish a connection having a required Quality-of-Service.

21. A method as claimed in claim 20, **characterized in that** the method includes a step of enforcing service level specifications at ingress points of a virtual service network.

22. A method as claimed in claim 20, **characterized in that** the identity of the virtual service network to which the destination terminal is connected is inserted in the relayed request, and the identity of a next-hop virtual service network in the path between the home virtual service network and the destination virtual service network is included in the relayed request at the home virtual service network and each intervening next-hop virtual service network.

23. A method of configuring an inter-domain virtual service network between two or more peering intra-domain virtual service networks, **characterized by** the steps of:
- establishing domain service level specifications (VSN SLA) across each domain;
- establishing inter-domain service level specifications between pairs of peering intra-domain virtual service networks;
- controlling resource availability within each domain to conform to the domain service level specification under the control of a corresponding network management system; and
- controlling resource availability between the domains of peering virtual service networks to conform to the inter-domain service level specifications.

24. A method as claimed in claim 23 in which intra-domain virtual service network traffic is controlled by corresponding virtual service network controller, the method being **characterized in that** routing information is stored in Virtual Routing contexts, and **in that** the routing information is communicated from the Virtual Routing contexts to the virtual service network controller.

25. A method as claimed in claim 24, **characterized in that** said routing information is communicated by out-of-band signaling.

26. A method as claimed in claim 25, **characterized in that** said routing information is communicated using BOARDER GATEWAY PROTOCOL or alternative routing protocol sessions.

27. A method as claimed in claim 24, **characterized in that** said routing information includes ingress/egress information for the dataflow.

28. A method as claimed in claim 24, **characterized in that** the inter-domain service level specifications cascade the requirements of peered virtual service networks.

29. A method of transmitting dataflows across an inter-domain virtual service network including two or more peering virtual service networks,
**characterized in that** Virtual Routing (VR) contexts are installed in association with edge routers (ER) and border routers (BR) of the domain of each virtual service network to ensure internal dataflows within the corresponding virtual service network are contained within the resources allocated to that virtual service network,
**in that** internal dataflows are directed to an appropriate edge router or border router determined from the destination address of the dataflow and the Virtual Routing context,
and **in that** dataflows which are directed to a border router being transmitted to or through a further virtual service network are controlled within said further virtual service network by further Virtual Routing contexts installed in association with the edge routers or border routers of the domain of said further virtual service network.

30. A method of setting up a dataflow between a service provider (SP) and an user in a telecommunication system including a plurality of peered virtual service networks, the method being **characterized in that**:
- the user sends a request to the application control server (MMCS) for a requested service,
- a unique IP address is allocated by the service provider to the user within the virtual service network environment,
- the user and service provider negotiate the Quality-of-Service (QoS) requested via the application control server,
- the application control server initiates call resource signaling through intermediate virtual service network controllers to destination application control server, and
- each virtual service network controller checks resources and relays the request to a next hop virtual service network controller.

31. A method as claimed in claim 30, wherein an ingress is identified from a requesting party's details, and an egress is determined from the next hop and peering point using routing table mapping the destination IP address to next hop virtual service network.

32. A virtual service network (VSN) for providing users with predetermined Quality-of-Service (QoS), the virtual service network being a virtual overlay (30) on a data network (36), the virtual service network including two or more interconnected access points (ER) via which users and/or other hosts are connected to the network,
**characterized in that** said virtual service network includes memory means adapted for storing virtual routing tables and information identifying QoS guarantees for each user, and includes a virtual service network controller (VSNC) adapted to allocate network resources on a per-dataflow basis in accordance with the corresponding Quality-of-Service (QoS) guarantees.

33. A virtual service network as claimed in claim 32, wherein the data network supports one or more service networks, **characterized in that**, for at least one virtual service network (VSN), the data network includes one or more core routers (P: 40) interposed between at least one pair of edge routers (ER: 38), and wherein the core routers and edge routers of said virtual service network maintain a virtual routing context for said virtual service network.

34. A virtual service network as claimed in claim 32, **characterized in that** the virtual service network controller (VSNC) performs per-dataflow admission control for every dataflow requesting transit across the virtual service network (VSN).

35. A virtual service network controller (VSNC) adapted for controlling dataflows in a virtual service network (VSN) in accordance with predetermined Quality-of-Service (QoS) guarantees,
**characterized in that** said controller includes memory means comprising a first storage zone for storing information identifying network availability and a second storage zone for storing information identifying the predetermined Quality-of-Service guarantees,
and **in that** said controller is further adapted for controlling the allocation of network resources on a per-dataflow basis in accordance with Quality-of-Service information.

36. A packet network including two or more virtual service networks, **characterized in that**, for each virtual service network, edge routers and bridging routers associated with the virtual service network include Virtual Routing contexts unique to that virtual service network, and each said Virtual Routing context containing routing information unique to its virtual service network.
